Europäisches Patentamt

European Patent Office

Office européen des brevets

(11) Numéro de publication : **0 506 548 A1**

# (12) DEMANDE DE BREVET EUROPEEN

(21) Numéro de dépôt : **92400798.2**

(51) Int. Cl.⁵ : **A23L 1/28, A23L 1/06**

(22) Date de dépôt : **24.03.92**

(30) Priorité : **28.03.91 FR 9103784**

(43) Date de publication de la demande :
**30.09.92 Bulletin 92/40**

(84) Etats contractants désignés :
**AT BE CH DE DK ES GB GR IT LI LU NL PT SE**

(71) Demandeur : **Dubois, Alain**
**402 rue Pasteur, Mérard**
**F-60250 Mouy (FR)**

(72) Inventeur : **Dubois, Alain**
**402 rue Pasteur, Mérard**
**F-60250 Mouy (FR)**

(74) Mandataire : **Faber, Jean-Paul**
**CABINET FABER 35, rue de Berne**
**F-75008 Paris (FR)**

(54) **Procédé de conservation de champignons.**

(57) Procédé de conservation de champignons dans lequel les champignons sont nettoyés caractérisé en ce qu'il consiste à les faire cuire à l'étuvée de manière à ce qu'ils rendent leur jus, à les séparer dudit jus, à additionner ce dernier d'un suc végétal ou animal se coagulant en se refroidissant.

EP 0 506 548 A1

La présente invention vise la conservation et la présentation de champignons.

La présente invention vise, en particulier, les champignons dits de "Paris", mais est, également, adaptée aux autres champignons tels que pleurottes, morilles, girolles, etc...

En général, les champignons sont déshydratés et, au moment de l'emploi, ils doivent être trempés un certain temps. De tels champignons perdent pratiquement toute leur saveur.

Egalement, on conserve les champignons en les faisant cuire à l'eau puis en les mettant dans des bocaux ou boîtes hermétiques et en les stérilisant. On a également constaté que ces champignons ainsi conservés ont peu degoût.

L'un des buts de la présente invention est de remédier à ces divers inconvénients.

Le procédé, selon l'invention, consiste après que les champignons aient été lavés à les faire cuire à l'étuvée de manière à ce qu'ils rendent leur jus, à les séparer du jus, ce dernier étant additionné d'un suc végétal ou animal se coagulant en se refroidissant.

Les champignons peuvent être ensuite conditionnés mélangés au jus qui, en se coagulant, forment un bloc.

Ce bloc peut être emballé sous vide, placé dans un récipient fermé hermétiquement. On peut également le congeler ou simplement le pasteuriser ou le stériliser.

On peut également, à titre de variante, placer les champignons dans un emballage séparé du jus, l'emballage étant fermé hermétiquement. Les champignons et le jus peuvent ensuite être soumis à des traitements de conservation, pasteurisation, congélation etc....

Les champignons avant d'être cuits à l'étuvée peuvent être coupés en fines lamelles ou réduits en purée.

De préférence comme suc se coagulant en se refroidissant, on utilise de la gelée.

Les champignons mélangés à leur jus et coagulés peuvent se conserver plusieurs semaines sans inconvénients et ils sont prêts à l'emploi, un simple réchauffage étant suffisant. Ils conservent leur goût et peuvent agrémenter de nombreux plats, viandes, poissons, gibiers, volailles.

Même conservés, congelés ou stérilisés les champignons gardent le goût d'un produit frais.

On conçoit que le procédé, selon l'invention, est très simple, peu onéreux et qu'il offre à la ménagère un nouveau produit prêt à l'emploi et particulièrement goûteux et fin.

Bien entendu, l'invention n'est pas limitée aux modes de mise en oeuvre qui viennent d'être décrits, on pourra y apporter des modifications de détail sans sortir pour cela du cadre de l'invention.

**Revendications**

1°- Procédé de conservation de champignons dans lequel les champignons sont nettoyés caractérisé en ce qu'il consiste à les faire cuire à l'étuvée de manière à ce qu'ils rendent leur jus, à les séparer dudit jus, à additionner ce dernier d'un suc végétal ou animal se coagulant en se refroidissant.

2°- Procédé de conservation de champignons, selon la revendication 1, caractérisé en ce qu'on mélange les champignons avec le jus additionné du suc végétal ou animal se coagulant en se refroidissant avant la coagulation et on place l'ensemble dans un emballage.

3°- Procédé de conservation de champignons, selon la revendication 2, caractérisé en ce qu'il consiste à soumettre l'emballage rempli des champignons et du jus additionné du suc à un procédé de conservation.

4°- Procédé de conservation de champignons, selon la revendication 3, caractérisé en ce qu'on utilise comme procédé de conservation la congélation.

5°- Procédé de conservation de champignons, selon la revendication 3, caractérisé en ce qu'on utilise comme procédé de conservation la stérilisation.

6°- Procédé de conservation de champignons, selon la revendication 3, caractérisé en ce qu'on utilise comme procédé de conservation la pasteurisation.

7°- Procédé de conservation de champignons, selon la revendication 3, caractérisé en ce qu'on utilise comme procédé de conservation, la conservation sous-vide.

8°- Procédé de conservation de champignons, selon la revendication 1, caractérisé en ce qu'il consiste à emballer les champignons et le jus additionné du suc séparément.

9°- Procédé de conservation de champignons, selon la revendication 7, caractérisé en ce qu'il consiste à soumettre les champignons et le jus additionné du suc et emballés séparement à un procédé de conservation.

10°- Procédé de conservation de champignons, selon la revendication 1, caractérisé en ce qu'il consiste à couper les champignons en fines lamelles avant leur cuisson à l'étuvée.

11°- Procédé de conservation de champignons, selon la revendication 1, caractérisé en ce qu'on utilise comme suc de la gelée.

12°- Procédé de conservation de champignons, selon la revendication 1, caractérisé en ce qu'il consiste à réduire en purée les champignons préalablement à leur cuisson à l'étuvée.

**European Patent Office**

## EUROPEAN SEARCH REPORT

Application Number

EP 92 40 0798

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2 197 531 (BLANCHAUD M) <br> * claims 1-5,7 * <br> --- | 1-3,7 | A23L1/28 <br> A23L1/06 |
| A | WORLD PATENTS INDEX LATEST <br> Derwent Publications Ltd., London, GB; <br> AN 85-014973 <br> & JP-A-59 210 853 (NODA WAX KK) 29 November 1984 <br> * abstract * <br> --- | 1-2,11 | |
| A | EP-A-0 006 821 (DELAVEYNE) <br> * claims 1-5; examples * <br> ----- | 1-2,11 | |
| | | | **TECHNICAL FIELDS SEARCHED (Int. Cl.5 )** <br><br> A23L |

The present search report has been drawn up for all claims

| Place of search | Date of completion of the search | Examiner |
|---|---|---|
| THE HAGUE | 22 JUNE 1992 | SANTOS DIAZ A |

EPO FORM 1503 03.82 (P0401)

3